# FASCICULE DE BREVET EUROPEEN

(11) **EP 2 080 693 B1**
(45) Date de publication et mention de la délivrance du brevet: **17.07.2013**
(21) Numéro de dépôt: 09150019.9
(22) Date de dépôt: 05.01.2009
(51) Int. Cl.: B62D 25/16

(54) **Dispositif de renforcement de cote de caisse d'un vehicule automobile**
Verstärkungsvorrichtung der Seitenfläche des Aufbaus eines Kraftfahrzeugs
Device for reinforcing the side of an automobile body

(30) Priorité: 17.01.2008 FR 0850278
(43) Date de publication de la demande: 22.07.2009
(73) Titulaire: PEUGEOT CITROËN AUTOMOBILES S.A., 78140 Vélizy Villacoublay (FR)
(72) Inventeur: Briand, Sébastien, 811 06, BRASTILAVA (SK)
(74) Mandataire: Fernandez, Francis Lionel

(56) Documents cités:
- EP-A- 1 153 822
- EP-A- 1 721 811
- DE-A1-102005 041 216
- US-A1- 2005 211 484
- US-A1- 2006 001 279
- US-A1- 2006 001 293
- US-A1- 2006 202 517

## Description

La présente invention est relative à un véhicule automobile comportant un côté de caisse renforcé. Un tel véhicule est décrit dans le document EP 1153822 A2. Le document montre le préambule de la revendication 1. Plus particulièrement, l'invention concerne un véhicule automobile comportant un côté de caisse renforcé au niveau d'une zone d'accostage d'un pare-chocs arrière. On entend par zone d'accostage, les zones assurant notamment l'accostage entre différents éléments de carrosserie du véhicule, c'est-à-dire la mise en référence des bords de ces différents éléments.

Afin de répondre à une exigence d'esthétisme grandissante, les demandes de « style » imposent désormais des véhicules automobiles comportant d'une part des éléments de carrosserie avec des formes de plus en plus complexes, et d'autre part des jeux et des affleurements réduits entre les différents éléments du véhicule. Certaines de ces demandes de « style » notamment au niveau de la zone d'accostage du pare-chocs arrière sur le côté de caisse posent quelques problèmes de réalisation avec notamment des problèmes de rigidité locale.

En effet pour répondre à cet esthétisme d'ensemble, il est de plus en plus demandé des accostages de pare-chocs avec des formes complexes de lignes brisées. On désigne par les termes ligne brisée, une ligne composée d'une pluralité de segments de droites formant une suite d'angles dans un même plan. Ces formes en lignes brisées créent une rupture de forme au niveau de la zone structurelle du côté de caisse engendrant une souplesse du côté de caisse dans une zone bien définie. Dans cette zone, le côté de caisse peut alors facilement se déformer suite à différentes manipulations notamment lors des opérations de ferrage ou lors des opérations de montage du pare-chocs, engendrant par conséquent des défauts d'aspects non acceptables qui devront être retouchés avant la livraison du véhicule au client. Ces opérations de retouche représentent par ailleurs un coût supplémentaire non répercuté sur le prix de vente, et ne garantissent pas la géométrie initiale entre le pare-chocs et le côté de caisse, notamment la condition d'affleurement.

Dans ce contexte, l'invention vise à fournir une solution aux problèmes qui viennent d'être exposés.

A cet effet, l'invention propose un véhicule automobile comprenant un renfort tel que décrit dans la revendication 1.

Outre les caractéristiques principales qui viennent d'être mentionnées dans le paragraphe précédent, le véhicule automobile selon l'invention peut présenter une ou plusieurs caractéristiques supplémentaires ci-dessous, considérées individuellement ou selon toutes les combinaisons techniquement possibles :
- ladite pièce de rigidification est une patte de forme allongée sensiblement identique à la forme de ladite patte de fixation ;
- ladite pièce de rigidification est fixée à ladite première partie dudit côté de caisse par soudure ;
- ladite pièce de rigidification est fixée à ladite première partie (2a) dudit côté de caisse par soudure électrique ;
- ledit renfort présente une deuxième pièce de rigidification fixée à ladite une deuxième patte de fixation dudit côté de caisse ;
- ladite deuxième pièce de rigidification est soudée à ladite une deuxième patte de fixation dudit côté de caisse.

La présente invention a également pour objet un procédé d'assemblage d'un véhicule automobile selon l'invention comportant les étapes suivantes :
- une première étape d'assemblage dudit renfort avec ledit côté de caisse par soudure, incluant notamment la fixation par soudure de la pièce de rigidification à la patte de fixation ;
- une deuxième étape de mise en position dudit renfort et dudit côté de caisse incluant :
   - une opération de positionnement de ladite deuxième partie dudit côté de caisse au moyen d'une pluralité de pièces d'appui dans un outil de ferrage ;
   - une opération de positionnement de ladite première partie dudit côté de caisse au moyen d'au moins une pièce d'appui dans ledit outil de ferrage ;
   - une opération de positionnement dudit renfort au moyen d'une pluralité de pièces d'appui dans ledit outil de ferrage ;
   - une opération de réglage du positionnement de la première partie dudit côté de caisse au moyen de ladite au moins une pièce d'appui.

L'invention sera mieux comprise, et d'autres buts, caractéristiques, détails et avantages de celle-ci apparaîtront plus clairement dans la description explicative qui va suivre faite en référence aux dessins schématiques annexés donnés uniquement à titre d'exemple illustrant un mode de réalisation de l'invention, et dans lesquels :
- la figure 1 est une représentation tridimensionnelle d'un côté de caisse de véhicule illustrant une zone d'accostage avec le pare-chocs arrière selon l'invention ;
- la figure 2 est une représentation tridimensionnelle illustrant les zones d'appui des pièces d'appui de l'outil de ferrage lors du procédé de ferrage du côté de caisse et du renfort selon l'invention.

Les notions de direction et de position, de type "haut", "bas", "droite", "gauche" sont mentionnées dans des conditions classiques de disposition des différents éléments concernés lorsqu'ils sont effectivement mis en place dans un dispositif de renforcement d'un côté de caisse d'un véhicule automobile.

On définit une orientation suivant trois axes X, Y, Z qui correspondent à l'orientation usuelle du véhicule, à savoir respectivement à l'axe longitudinal orienté dans la direction de marche avant X, à l'axe transversal Y, et à l'axe vertical Z orienté de bas en haut.

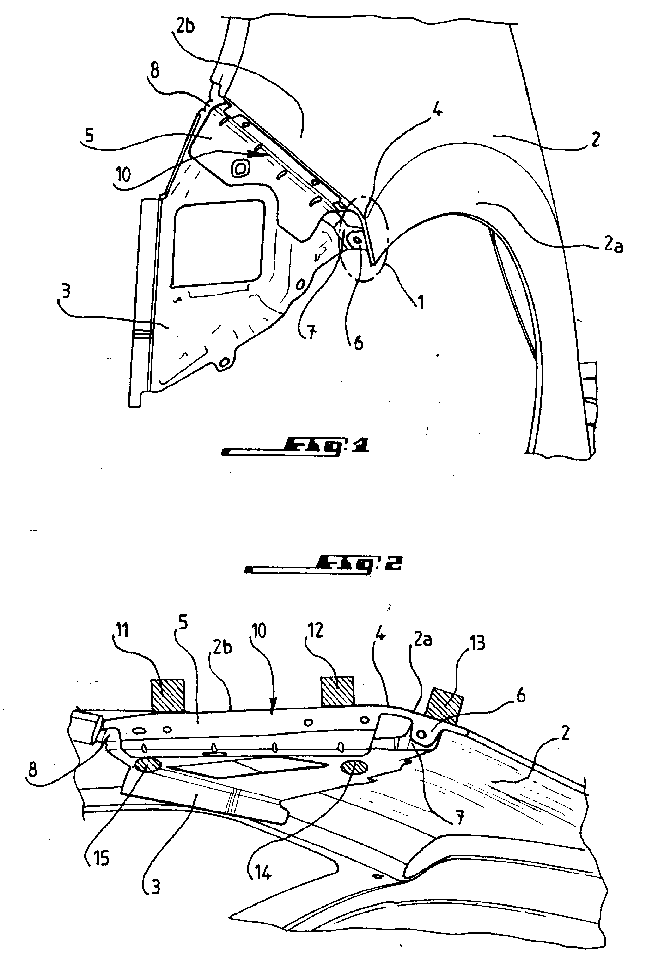

La figure 1 représente un côté de caisse 2 d'un véhicule automobile au niveau d'une zone d'accostage 10 avec un pare-chocs arrière (non représenté). On entend par zone d'accostage 10, une zone de mise en référence d'éléments de carrosserie du véhicule tels que le pare-chocs avec les bords du côté de caisse 2.

Dans cette zone d'accostage 10, le côté de caisse 2 présente une première partie 2a délimitant un passage de roue et une deuxième partie 2b formant une pliure 4 avec la première partie 2a. La première partie 2a et 1a deuxième partie 2b délimitent la zone d'accostage 10 avec un profil de type « ligne brisée » créant une rupture de forme du côté de caisse 2.

Cette rupture de forme entre les parties 2a et 2b du côté de caisse 2 engendre une fragilisation de la première partie 2a et notamment une zone de souplesse 1. La partie 2a du côté de caisse 2 est facilement déformable lors des différentes manipulations, notamment lors de l'étape de ferrage ou lors de l'étape de montage du pare-chocs.

De façon connue, le côté de caisse 2 comporte dans sa partie 2b une découpe de matière formant une première patte de fixation 5. Cette première patte de fixation 5 permet une fois mise en position d'accoster le pare-chocs et comporte différents orifices permettant son montage et son serrage. Le côté de caisse 2 est constitué également d'une deuxième découpe de matière 6, formant une deuxième patte de fixation prolongeant la partie 2a du côté de caisse 2 et comportant également au moins un orifice permettant le montage et le serrage du pare-chocs.

Pour rigidifier le côté de caisse 2 dans cette zone d'accostage, un renfort 3, appelé fermeture de pied volet, est monté solidaire au côté de caisse 2. Le renfort 3 est solidarisé à la deuxième partie 2b du côté de caisse 2 usuellement via une première patte de rigidification 8 par soudure lors de l'opération de ferrage. Le renfort 3 selon l'invention présente de plus une deuxième patte de rigidification 7 permettant de rigidifier la première partie 2a du côté de caisse 2 et ainsi supprimer la zone de souplesse 1 engendrée par la rupture de forme de la zone d'accostage 10. La patte de rigidification 7 est fixée solidairement à la première partie 2a du côté de caisse 2 via la patte de fixation 6 par point de soudure électrique lors de l'opération de ferrage. De cette façon, la zone d'accostage 10 est rigidifiée, et toutes les dégradations et les déformations du côté de caisse 2 dues aux manipulations en ligne lors de l'opération de ferrage ou lors de l'opération de montage sont évitées.

Il est évident que les composants qui viennent d'être décrits présentent généralement une symétrie par rapport au plan longitudinal de symétrie du véhicule X-Z de sorte que l'on ne décrira qu'une partie du renforcement de côté de caisse selon l'invention, située à l'arrière droite du véhicule, étant entendu que des dispositions identiques sont prévues du côté arrière gauche.

La figure 2 est une représentation de la zone d'accostage 10 du côté de caisse 2 après l'opération d'assemblage et l'opération de mise en position montrant les zones d'appui de l'outil de ferrage sur l'ensemble côté de caisse 2 et renfort 3.

Lors de l'assemblage par point de soudure du renfort 3 avec le côté de caisse 2 détaillé ci-dessus, le renfort 3 est mis en position à l'aide d'une pluralité de pièces d'appui dans l'outil de ferrage. Lors de cette mise en position, le côté de caisse 2 est également contraint en position à l'aide d'une pluralité de pièces d'appui dans l'outil de ferrage afin d'éviter toutes déformations du côté de caisse 2 lors de cette opération.

Les repères 11, 12, 13 indiquent les zones d'appui des pièces d'appui de l'outil de ferrage sur le côté de caisse 2, les repères 14, 15 indiquent les zones d'appui des pièces d'appui de l'outil de ferrage sur le renfort 3. Les pièces d'appuis dans l'outil de ferrage correspondant aux zones d'appui 11, 12 permettent de garantir la position de la deuxième partie 2b du côté de caisse 2 et la pièce d'appui correspondant à la zone d'appui 13 permet de garantir la position de la première partie du côté 2a du côté de caisse 2 lors de l'opération de ferrage ; de la même façon, les pièces d'appui de l'outil de ferrage correspondant aux zones d'appui 14, 15 garantissent la position du renfort 3 lors de l'opération de ferrage.

Les pièces d'appui des différentes zones d'appui 11, 12, 13, 14, 15 sont judicieusement positionnées dans l'outil de ferrage afin de contrôler la déformation des différentes parties 2a, 2b du côté de caisse 2 pendant l'opération de ferrage et ainsi contrôler leur position après l'opération de ferrage. Grâce à l'invention, il est alors possible de maîtriser et de régler plus précisément la position des différentes parties 2a, 2b du côté de caisse 2 et ainsi satisfaire la condition d'affleurement avec le pare-chocs.

Pour cela, le procédé suivant l'invention propose un réglage de la position de la pièce d'appui correspondant à la zone d'appui 13 afin de contraindre la première partie 2a du côté de caisse 2 dans une position permettant d'obtenir l'affleurement requis avec le pare-chocs. Le maintien en position de la première partie 2a du côté de caisse 2 après l'opération de ferrage est réalisé par la patte de rigidification 7 du renfort, évitant de cette façon la présence d'une zone de souplesse du côté de caisse 2 susceptible de se déformer pendant l'opération de montage du pare-chocs.

Ainsi le dispositif de renforcement de côté de caisse et le procédé d'obtention du dispositif selon l'invention permettent de rigidifier le côté de caisse et de mettre en position les différentes parties composant la zone d'accostage du côté de caisse évitant ainsi toute dégradation lors des manipulations du côté de caisse en opération de ferrage ou de montage ; les opérations de retouche et les coûts associés sont supprimés.

De plus, la mise au point de la position des différents éléments afin de garantir l'affleurement pare-chocs/côté de caisse est facilitée lors de l'assemblage au ferrage à l'aide des pièces d'appui dans l'outil de ferrage. La réactivité de remise en conformité dans le cas d'une dérive lors de la vie courante du véhicule est aussi nettement améliorée.

Ainsi, la bonne géométrie du côté de caisse est garantie, notamment la condition d'affleurement, par le positionnement du côté de caisse dans l'outil de ferrage et par la rigidification du côté de caisse au moyen d'une patte de rigidification supplémentaire sur le renfort.

## Revendications

1. Véhicule automobile comprenant un renfort (3) solidaire d'un côté de caisse (2), ledit côté de caisse (2) comportant :
- une première partie (2a) et une deuxième partie (2b) ;
- une première patte de fixation (5) et une deuxième patte de fixation (6)
- ladite première partie (2a) délimitant un passage de roue et présentant ladite deuxième patte de fixation (6);
- ladite deuxième partie (2b) formant une pliure (4) avec ladite première partie (2a) et comportant ladite première patte de fixation (5) ;
ledit renfort (3) comporte une première pièce de rigidification (8) permettant de solidariser ledit renfort (3) à la deuxième partie (2b) du côté de caisse (2) et une deuxième pièce de rigidification (7) fixée à ladite première partie (2a) par l'intermédiaire de ladite deuxième patte de fixation (6) pour permettre de rigidifier ladite première partie (2a) du côté de caisse (2)**; caractérisé en ce que** la première et la deuxième patte de fixation servant à l'accostage d'un pare-chocs et qui comportent des orifices permettant le montage et le serra dudit pare-chocs et que la première et la deuxieme patte de fixation sont formées d'une découpe de matière, la deuxième patte de fixation prolongeant la partie (2a) du coté de caisse (2).

2. véhicule automobile selon la revendication 1 **caractérisé en ce que** ladite deuxième pièce de rigidification (7) est une patte de forme allongée sensiblement identique à la forme de ladite deuxième patte de fixation (6).

3. Véhicule automobile selon l'une des revendications précédentes **caractérisé en ce que** ladite deuxième pièce de rigidification (7) est fixée à ladite première partie (2a) dudit côté de caisse (2) par soudure.

4. Véhicule automobile selon l'une des revendications 1 à 3 **caractérisé en ce que** ladite deuxième pièce de rigidification (7) est fixée à ladite première partie (2a) dudit côté de caisse (2) par soudure électrique.

5. Véhicule automobile selon l'une des revendications 1 à 4 **caractérisé en ce que** ladite première pièce de rigidification (8) est fixée à ladite première patte de fixation (5) dudit côté de caisse (2).

6. Véhicule automobile selon la revendication 5 **caractérisé en ce que** ladite première pièce de rigidification (8) est soudée à ladite première patte de fixation (5) dudit côté de caisse (2).

7. Procédé d'assemblage d'un véhicule selon l'une des revendications 1 à 6 **caractérisé en ce qu'**il comporte les étapes suivantes :
- une première étape d'assemblage dudit renfort (3) avec ledit côté de caisse (2) par soudure, incluant notamment la fixation par soudure de ladite pièce de rigidification (7) à ladite patte de fixation (6) ;
- une deuxième étape de mise en position dudit renfort (3) et dudit côté de caisse (2) incluant :
• une opération de positionnement de ladite deuxième partie (2b) dudit côté de caisse (2) au moyen d'une pluralité de pièces d'appui (11, 12) dans un outil de ferrage ;
• une opération de positionnement de ladite première partie (2a) dudit côté de caisse (2) au moyen d'au moins une pièce d'appui (13) dans ledit outil de ferrage ;
• une opération de positionnement dudit renfort (3) au moyen d'une pluralité de pièces d'appui (15, 14) dans ledit outil de ferrage ;
• une opération de réglage du positionnement de la première partie (2a) dudit côté de caisse (2) au moyen de ladite au moins une pièce d'appui (13).

## Patentansprüche

1. Kraftfahrzeug, das eine Verstärkung (3) aufweist, die fest mit einer Aufbauseitenfläche (2) verbunden ist, wobei die Aufbauseitenfläche (2) Folgendes aufweist:
- einen ersten Teil (2a) und einen zweiten Teil (2b) ;
- eine erste Befestigungspratze (5) und eine zweite Befestigungspratze (6);
- wobei der erste Teil (2a) einen Radlauf abgrenzt und die zweite Befestigungspratze (6) aufweist;
- wobei der zweite Teil (2b) eine Falte (4) mit dem ersten Teil (2a) bildet und die erste Befestigungspratze (5) aufweist;
wobei die Verstärkung (3) einen ersten Versteifungsteil (8) aufweist, der es erlaubt, die Verstärkung (3) mit dem zweiten Teil (2b) der Aufbauseitenfläche (2) fest zu verbinden, und einen zweiten Versteifungsteil (7), der an dem ersten Teil (2a) über die zweite Befestigungspratze (6) befestigt ist, um es zu erlauben, den ersten Teil (2a) der Aufbauseitenfläche (2) zu versteifen;
**dadurch gekennzeichnet, dass** die erste und die zweite Befestigungspratze, die zum Andocken eines Stoßfängers dienen und die Öffnungen aufweisen, die die Montage und das Festziehen des Stoßfängers erlauben, und dass die erste und die zweite Befestigungspratze aus einem Werkstoffausschnitt ausgebildet sind, wobei die zweite Befestigungspratze den Teil (2a) der Aufbauseitenfläche (2) verlängert.

2. Kraftfahrzeug nach Anspruch 1, **dadurch gekennzeichnet, dass** der zweite Versteifungsteil (7) eine Pratze mit länglicher Form ist, die im Wesentlichen mit der Form der zweiten Befestigungspratze (6) identisch ist.

3. Kraftfahrzeug nach einem der vorhergehenden Ansprüche, **dadurch gekennzeichnet, dass** der zweite Versteifungsteil (7) an dem ersten Teil (2a) der Aufbauseitenfläche (2) durch Schweißen befestigt ist.

4. Kraftfahrzeug nach einem der Ansprüche 1 bis 3, **dadurch gekennzeichnet, dass** der zweite Versteifungsteil (7) an dem ersten Teil (2a) der Aufbauseitenfläche (2) durch Elektroschweißen befestigt ist.

5. Kraftfahrzeug nach einem der Ansprüche 1 bis 4, **dadurch gekennzeichnet, dass** der erste Versteifungsteil (8) an der ersten Befestigungspratze (5) der Aufbauseitenfläche (2) befestigt ist.

6. Kraftfahrzeug nach Anspruch 5, **dadurch gekennzeichnet, dass** der erste Versteifungsteil (8) an die erste Befestigungspratze (5) der Aufbauseitenfläche (2) geschweißt ist.

7. Verfahren zum Zusammenfügen eines Fahrzeugs nach einem der Ansprüche 1 bis 6, **dadurch gekennzeichnet, dass** es die folgenden Schritte aufweist:
- einen ersten Zusammenfügeschritt der Verstärkung (3) mit der Aufbauseitenfläche (2) durch Schweißen, der insbesondere das Befestigen durch Schweißen des Versteifungsteils (7) an der Befestigungspratze (6) enthält;
- einen Positionierungsvorgang der Verstärkung (3) und der Aufbauseitenfläche (2), der Folgendes enthält:
• einen Positionierungsvorgang des zweiten Teils (2b) auf der Aufbauseitenfläche (2) mittels mehreren Auflageteilen (11, 12) in einem Beschlagwerkzeug;
• einen Positionierungsvorgang des ersten Teils (2a) der Aufbauseitenfläche (2) mittels mindestens einem Auflageteil (13) in dem Beschlagwerkzeug;
• einen Positionierungsvorgang der Verstärkung (3) mittels mehrerer Auflageteile (15, 14) in dem Beschlagwerkzeug;
• einen Einstellvorgang der Positionierung des ersten Teils (2a) der Aufbauseitenfläche (2) mittels dem mindestens einen Auflageteil (13).

## Claims

1. A motor vehicle including a reinforcement (3) integral with a body side (2), the said body side (2) comprising:
- a first part (2a) and a second part (2b);
- a first fixing lug (5) and a second fixing lug (6);
- the said first part (2a) delimiting a wheel arch and having the said second fixing lug (6);
- the said second part (2b) forming a fold (4) with the said first part (2a) and comprising the said first fixing lug (5);
the said reinforcement (3) comprises a first stiffening piece (8) permitting the said reinforcement (3) to be integrated to the second part (2b) of the body side (2) and a second stiffening piece (7) fixed to the said first part (2a) by means of the said second fixing lug (6) to permit the said first part (2a) of the body side (2) to be stiffened;
**characterized in that** the first and the second fixing lug serving for the coupling of a bumper and which comprise orifices permitting the mounting and the clamping of the said bumper and that the first and the second fixing lug are formed by a cutout of material, the second fixing lug extending the part (2a) of the body side (2).

2. The motor vehicle according to Claim 1, **characterized in that** the said second stiffening piece (7) is a lug of elongated shape substantially identical to the shape of the said second fixing lug (6).

3. The motor vehicle according to one of the preceding claims, **characterized in that** the said second stiffening piece (7) is fixed to the said first part (2a) of the said body side (2) by welding.

4. The motor vehicle according to one of Claims 1 to 3, **characterized in that** the said second stiffening piece (7) is fixed to the said first part (2a) of the said body side (2) by electric welding.

5. The motor vehicle according to one of Claims 1 to 4, **characterized in that** the said first stiffening piece (8) is fixed to the said first fixing lug (5) of the said body side (2).

6. The motor vehicle according to Claim 5, **characterized in that** the said first stiffening piece (8) is welded to the said first fixing lug (5) of the said body side (2).

7. An assembly method of a vehicle according to one of Claims 1 to 6, **characterized in that** it comprises the following steps:
- a first assembly step of the said reinforcement (3) with the said body side (2) by welding, including in particular the fixing by welding of the said stiffening piece (7) to the said fixing lug (6);
- a second step of placing in position of the said reinforcement (3) and of the said body side (2) including:
• a positioning operation of the said second part (2b) of the said body side (2) by means of a plurality of support pieces (11, 12) in a carfitting tool;
• a positioning operation of the said first part (2a) of the said body side (2) by means of at least one support piece (13) in the said carfitting tool;
• a positioning operation of the said reinforcement (3) by means of a plurality of support pieces (15, 14) in the said carfitting tool;
• an adjustment operation of the positioning of the first part (2a) of the said body side (2) by means of the said at least one support piece (13).
